(19) Europäisches Patentamt

European Patent Office

Office européen des brevets

(11) **EP 0 777 109 B1**

(12) **EUROPÄISCHE PATENTSCHRIFT**

(45) Veröffentlichungstag und Bekanntmachung des Hinweises auf die Patenterteilung:
**06.04.2005 Patentblatt 2005/14**

(51) Int Cl.7: **G01F 1/40**

(21) Anmeldenummer: **96119633.4**

(22) Anmeldetag: **06.12.1996**

(54) **Vorrichtung zum Bestimmen der Stärke eines Gasvolumenstroms**

Apparatus for determining the force of a volumetric gas flow

Dispositif de détermination de la force d'un courant volumétrique gazeux

(84) Benannte Vertragsstaaten:
**AT CH DE DK FR GB LI**

(30) Priorität: **08.12.1995 DE 19545948**

(43) Veröffentlichungstag der Anmeldung:
**04.06.1997 Patentblatt 1997/23**

(73) Patentinhaber: **Waldner Laboreinrichtungen GmbH & Co.KG**
**88239 Wangen/Allgäu (DE)**

(72) Erfinder:
• **Kreuzer, Konrad, Dipl.-Ing.**
**87493 Lauben (DE)**

• **Liebsch, Jürgen, Dipl.-Ing.**
**88161 Lindenberg (DE)**
• **Heintz, Gerd**
**88289 Waldburg (DE)**

(74) Vertreter: **WILHELMS, KILIAN & PARTNER**
**Patentanwälte**
**Eduard-Schmid-Strasse 2**
**81541 München (DE)**

(56) Entgegenhaltungen:
US-A- 3 685 355        US-A- 4 375 224
US-A- 5 234 021        US-A- 5 312 297
US-A- 5 518 446

EP 0 777 109 B1

## Beschreibung

Die Erfindung betrifft eine Vorrichtung zum Bestimmen der Stärke eines Gasvolumenstroms in einem Strömungskanal eines Verbrauchers, insbesondere eines Abzugs.

Die Erfindung befasst sich somit mit einer Vorrichtung, mit Hilfe derer die Stärke eines Gasvolumenstroms, insbesondere eines Luftvolumenstroms in einem Verbraucher, insbesondere einem Luftverbraucher direkt gemessen werden kann. Eine derartige Vorrichtung erlaubt es, den erforderlichen Gasvolumenstrom je nach den Betriebsbedingungen des Verbrauchers zu bestimmen und einzuhalten.

Eine derartige Vorrichtung ist aus der US-A-5,234,021 bekannt.

Die Stärke eines Gasvolumenstroms in einem Strömungskanal eines Verbrauchers wird bisher mittels einer Drosselstelle in Form einer Blende, einer Düse, eines Venturi-Rohrs, einer festen Drosselklappe oder einer ähnlichen Drosselstelle bestimmt, indem der Wirkdruck vor und hinter der Drosselstelle gemessen und die Stärke des Gasvolumenstroms nach der Gleichung $V = C \cdot \sqrt{\Delta p}$ bestimmt wird, in der V die Stärke des Gasvolumenstroms bezeichnet, C der Drosselfaktor der Drosselstelle ist, der vom Aufbau der Drosselstelle abhängt, und $\Delta p$ die Druckdifferenz zwischen dem Wirkdruck vor und dem Wirkdruck hinter der Drosselstelle bezeichnet.

Das obige Meßprinzip hat allerdings den Nachteil, daß aufgrund des Zusammenhangs des Gasvolumenstroms mit der Quadratwurzel der Wirkdruckdifferenz das Nutzsignal mit dem Gasvolumenstrom quadratisch ansteigt. Das heißt mit anderen Worten, daß beispielsweise bei einer Verzehnfachung des Gasvolumenstroms das Nutzsignal um den Faktor 100 ansteigt. Druckmeßsensoren, die den Differenzdruck $\Delta p$ bei einem Signalhub von 1 : 100 in der erforderlichen Genauigkeit +/- 1% messen können, sind jedoch mit hohen Kosten verbunden und für Serienmeßeinrichtungen nicht geeignet.

Die der Erfindung zugrunde liegende Aufgabe besteht daher darin, eine Vorrichtung der eingangs genannten Art zu schaffen, die es erlaubt, handelsübliche Drucksensoren in deren höchstem Genauigkeitsbereich einzusetzen.

Diese Aufgabe wird gemäß der Erfindung durch die Ausbildung gelöst, die im kennzeichnenden Teil des Patentanspruchs 1 angegeben ist.

Bei der erfindungsgemäßen Ausbildung wird erreicht, daß der gemessene Differenzdruck $\Delta p$ über im wesentlichen den gesamten Bereich der zu messenden Gasvolumenströme nahezu konstant bleibt und dabei einen derartigen Wert hat, daß handelsübliche Sensoren in ihrem höchsten Genauigkeitsbereich zur Messung des Differenzdruckes $\Delta p$ eingesetzt werden können.

Die erfindungsgemäße Vorrichtung hat den weiteren Vorteil, daß aufgrund der Ausbildung der einen Drosselstelle mit variablem Drosselfaktor beispielsweise in Form einer Drosselklappe mittels der erfindungsgemäßen Vorrichtung auch eine Regelung des Gasvolumenstromes auf die jeweils gewünschte Stärke möglich ist.

Besonders bevorzugte Ausgestaltungen und Weiterbildungen der erfindungsgemäßen Vorrichtung sind Gegenstand der Patentansprüche 2 bis 5.

Die erfindungsgemäße Vorrichtung kann in der Weise verwandt werden, die im Anspruch 6 angegeben ist.

Im folgenden werden anhand der zugehörigen Zeichnung besonders bevorzugte Ausführungsbeispiele der Erfindung näher beschrieben. Es zeigen

Fig. 1 schematisch den Aufbau einer Vorrichtung zum Bestimmen der Stärke des Luftvolumenstroms in einem Abzug,

Fig. 2 den Aufbau einer Vorrichtung zum Bestimmen der Stärke eines Gasvolumenstroms in einem Strömungskanal,

Fig. 3 den Aufbau der in Strömungsrichtung vorne liegenden Drosselstelle bei den Vorrichtungen zum Bestimmen der Stärke eines Gasvolumenstromes im einzelnen,

Fig. 4 in einem Diagramm den Druckverlauf an drei Druckabnahmestellen der Vorrichtung zum Bestimmen der Stärke eines Gasvolumenstromes gegenüber dem Öffnungswinkel einer Drosselklappe,

Fig. 5A bis 5C schematisch die Arbeitsweise der Vorrichtung zum Bestimmen der Stärke des Luftvolumenstroms in einem Abzug und

Fig. 6 ein Kennlinienfeld zur Bestimmung der Stärke des Gasvolumenstromes aus dem Drosselfaktor der Drosselklappe und dem gemessenen Differenzdruck.

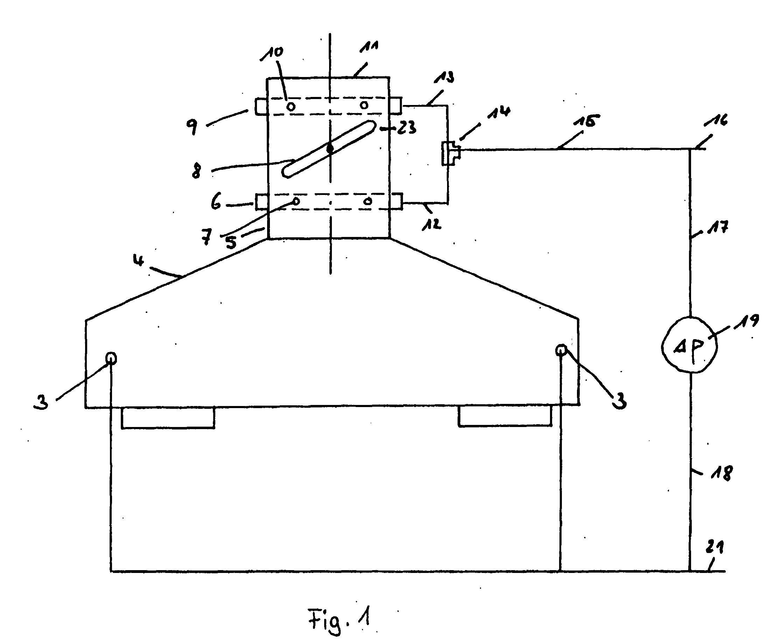

In Fig. 1 ist ein Ausführungsbeispiel der Vorrichtung zum Bestimmen der Stärke eines Gasvolumenstromes, nämlich des Luftvolumenstromes in einem Abzug dargestellt. Bei dieser Vorrichtung sind serienmäßig zwei Wirkdruckmeßstellen im Strömungskanal des Abzuges angeordnet, von denen die erste aus Teilen des Luftverbrauchers d.h. des Abzuges selbst besteht. Wie es in Fig. 1 dargestellt ist, weist ein Abzug üblicherweise eine Luftverteilungskammer 4 auf, die einen Luftsammelkanal oder Luftströmungskanal bildet und an mehreren Stellen die Luft aus dem Arbeitsraum des Abzuges ansaugt. An einer statischen Druckmeßstelle in Form von Bohrungen 3 wird der statische Druckverlust der Luftverteilungskammer 4 gemessen, der mit einer Erhöhung des Luftvolumenstromes langsam ansteigt. Aufgrund des geringen Eigendruckverlustes ist der statische Druckverlust an dieser Stelle jedoch niedrig. Da sich die Luftverteilungskammer 4 in Richtung auf das Abluftsystem d.h. in Richtung des Luftstromes zu einem Rohrstutzein 5 verengt, könnte zwischen der statischen Druckmeßstelle 3 und einer hinter der Verengung im Rohstutzen 5 angeordneten Druckmeßstelle in Form von Bohrungen 7 ein deutliches Drucksignal gemessen werden, da der Luftsammelkanal aufgrund dieser Ausbildung als Differenzdruckmeßblende wirkt. Wenn aus diesem Druckdifferenzsignal die Stärke des Volumenstroms nach der eingangs genannten Gleichung bestimmt wird, dann steht das Wirksignal in einem quadratischen Zusammenhang zum Druckdifferenzsignal, wobei jedoch ein höheres Signal als an der statischen Druckmeßstelle 3 erreicht würde.

Würde daher in üblicher Weise zwischen der statischen Druckmeßstelle 3 und der Druckmeßstelle 7 die Druckdifferenz gemessen, so könnte zwar aus dem in dieser Weise erhaltenen Druckdifferenzsignal der Volumenstrom bestimmt werden, eine derartige Messung hätte jedoch weiterhin den Nachteil, daß das Nutzsignal und der Volumenstrom immer noch in einem quadratischen Zusammenhang stehen würden.

Um die Messung an den Druckmessstellen 3 und 7 anschlußunabhängig zu machen, besteht im übrigen jede Meßstelle aus wenigstens zwei Meßpunkten oder Bohrungen, die gleichmäßig über den Querschnitt verteilt und über Ringleitungen miteinander verbundden sind. Durch diese Ringleitungen mit mehreren Bohrungen kann der Einfluß der Anschlußsituation minimiert werden.

Wie es weiterhin in Fig. 1 dargestellt ist, ist in Strömungsrichtung hinter der als Differenzdruckmeßblende wirkenden Luftverteilungskammer 4 im Rohrstutzen 5 eine weitere Drosselstelle in Form einer Drosselklappe 8 vorgesehen. Diese Drosselklappe 8 ist so ausgebildet, daß sie auch im vollständig geschlossenen Zustand gegenüber der Innenwand des Rohrstutzens 5 einen Spalt 23 begrenzt. Dieser Spalt 23 vergrößert sich mit steigendem Öffnungswinkel der Drosselklappe 8. Es ist ein Stellantrieb, zur Bewegung der Drosselklappe 8 vorgesehen, wobei der Stellwinkel der Drosselklappe 8 an ihrer Drehachse mittels eines Potentiometers oder Inkrementalgebers stufenlos mit hoher Genauigkeit erfaßbar ist. Die an der Drosselklappe 8 vorbeiströmende Luft wird gebremst, so daß die Drosselklappe 8 als ein Drosselorgan anzusehen ist. In Strömungsrichtung hinter der Drosselklappe 8 befindet sich eine dritte Druckmeßstelle in Form von Bohrungen 10, die über eine Ringleitung 9 miteinander verbunden sind. Es sind wenigstens drei Bohrungen 10 über die Ringfläche der Ringleitung vorgesehen, so dass der statische Druck an der Ringleitung 9 mit hoher Genauigkeit unabhängig von der Anströmund Abströmsituation erfasst werden kann.

Bei der in Fig. 1 dargestellten Vorrichtung sind somit drei Meßstellen nämlich an den Bohrungen 3, 7 und 10 vorgesehen, die mit entsprechenden Ringleitungen 6, 9 verbunden sind.

Die Druckmeßstellen 7 und 10 sind über ein T-Stück 14 miteinander verbunden, das über eine Leitung 15 mit der Umgebungsluft verbunden ist. Die Ringleitung, die die Bohrungen 3 an der ersten Meßstelle verbindet, ist gleichfalls mit der Umgebungsluft über eine Leitung 21 verbunden. Zwischen den Leitungen 15 und 21 wird über einen Differenzdrucksensor 19 der Druckunterschied gemessen.

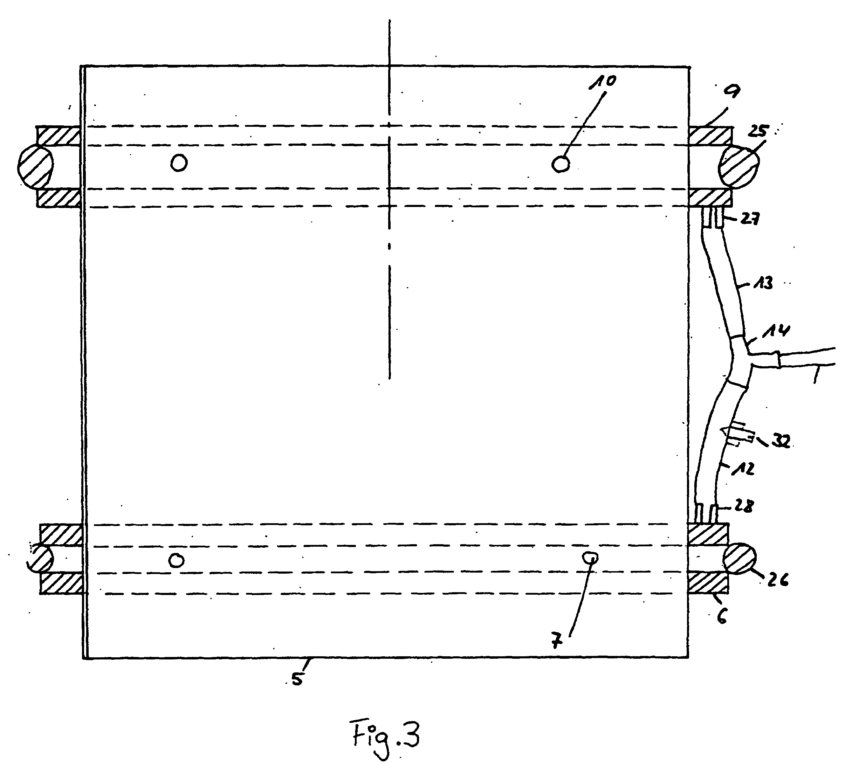

In Fig. 3 ist die Ausbildung der Druckmeßstelle vor und hinter der Drosselklappe 8 im einzelnen dargestellt. Die Ringleitungen 6 und 9 führen um den Rohrstutzen 5 herum und sind mit mehreren Bohrungen 7 und 10 im Rohrstutzen 5 verbunden. Durch die Verteilung von mehreren Bohrungen über den Umfang des Rohrstutzens 5 erfolgt ein Druckausgleich über die jeweilige Ringleitung zwischen verschiedenen Anströmungen der Bohrungen. Die Ringleitungen sind vorzugsweise mit einem O-Ring 25, 26 abgedichtet, der zur Reinigungszwecken leicht demontierbar ist. Die Ringleitungen 6 und 9 sind über Abgangsstutzen 27 und 28 sowie über Schlauchleitungen 12 und 13 mit dem T-Stück 14 verbunden, an dem eine Reduzierung 32 angebracht ist. Mittels der Reduzierung 32 kann der Durchfluß am T-Stück 14 und an der Ringleitung 6 eingestellt werden.'Das T-Stück 14 ist über die Schlauchleitung 15 mit der Umgebungsluft 16 verbunden.

In Fig. 4 sind die Druckverläufe gegenüber dem Öffnungswinkel der Drosselklappe 8 dargestellt. Die unterste Linie zeigt den Druckverlauf an. der ersten Meßstelle, d.h. an den Bohrungen 3, der von 0 bis 65° Öffnungswinkel der Drosselklappe 8 ansteigt und dann nahezu konstant ist, da danach der Volumenstrom nicht mehr ansteigt. Der Druckverlauf an der Verbindungsstelle zwischen den Druckabnahmestellen über der Drosselklappe 8, die miteinander verbunden sind, ist in Form der obersten Linie in Fig. 4 dargestellt. Dieser Druckverlauf zeigt eine leicht fallende Tendenz. Der Differenzdruck zwischen der kombinierten Druckmeßstelle über der Drosselklappe 8 und der Druckmeßstelle in der Luftverteilungskammer 2, der durch die mittlere Linie dargestellt ist, zeigt einen Verlauf, der bei 60 Pa beginnt und bei 45 Pa endet.

Wenn die Drosselklappe 8 um mehr als 65° geöffnet wird, so zeigt sich über der Drosselklappe 8 nahezu kein Differenzdruckabfall mehr, so daß der Druck an den Meßstellen über der Drosselklappe 8 identisch ist und die Gesamtmessung ausschließlich von der Blendenmessung an den Bohrungen 3 bestimmt ist. Das heißt, daß die Drosselklappe 8 keinen Einfluß mehr hat. Mit zunehmender Schließung der Drosselklappe steigt ihr Einfluß jedoch an. Das heißt im einzelnen, daß bei einem Öffnen der Drosselklappe der Druckverlust der gesamten Anordnung sinkt. Da bei unveränderten Anschlußbedingungen der gesamte Energiebetrag des Abzugs, der aus statischen und dynamischen Anteilen besteht, gleich bleibt, erhöht sich beim Absinken des statischen Druckverlustes der dynamische Druckverlust. Das heißt, daß der Volumenstrom steigt. Hierdurch steigen die Druckverluste an der ersten Meßstelle an den Bohrungen 3 an, während sich an der zweiten Meßstelle an den Bohrungen 7 eine Erhöhung des Druckverlustes bei einer Klappenstellung von 0 bis 65° ergibt. Bei einer weiteren Öffnung der Drosselklappe 8 steigen die Druckverluste nicht mehr an. An der dritten Meßstelle d.h. an den Bohrungen 10 ergibt bei geschlossener Drosselklappe 8 ein sehr hoher Druckanstieg, da bei geschlossener Drosselklappe 8 der statische Druckabfall an der Drosselklappe 8 höher ist. Dieser nimmt ab, ab 65° hat die Drosselklappe 8 keinen Einfluß mehr, so daß die Meßpunkte an den Meßstellen über der Drosselklappe 8 zusammenfallen.

Aufgrund der Verbindung der Meßstellen über der DrosselKlappe 8 d.h. der zweiten und der dritten Meßstelle wird der gemessene Differenzdruck zwischen der Verbindung der Meßstellen über der Drosselklappe 8 und der statischen Druckmeßstelle an den Bohrungen 3 nahezu konstant gehalten, auch wenn sich die tatsächlich anliegende Drucksignale stark ändern.

Der Grund dafür ergibt sich aus den Darstellungen von Fig. 5A bis 5C.

Fig. 5A zeigt die Anordnung bei voll geöffneter Drosselklappe 8. In diesem Zustand werden beispielsweise bei einem Druck von 200 Pa im Abzug und einem Volumenstrom von 1000m$^3$/h 60 Pa Druckabfall an der statischen Meßstelle an den Bohrungen 3 und weitere 40 Pa an der statischen Meßstelle in Form der Verengung der Luftverteilungskammer 2 gemessen, was insgesamt einen Druckabfall von 100 Pa ergibt. An der dritten Meßstelle hinter der Drosselklappe 8 werden gleichfalls 100 Pa gemessen, da bei geöffneter Drosselklappe 8 kein Druckverlust entsteht. Damit ergibt sich eine Differenzdruckmessung am Differenzdrucksensor 19 von 40 Pa.

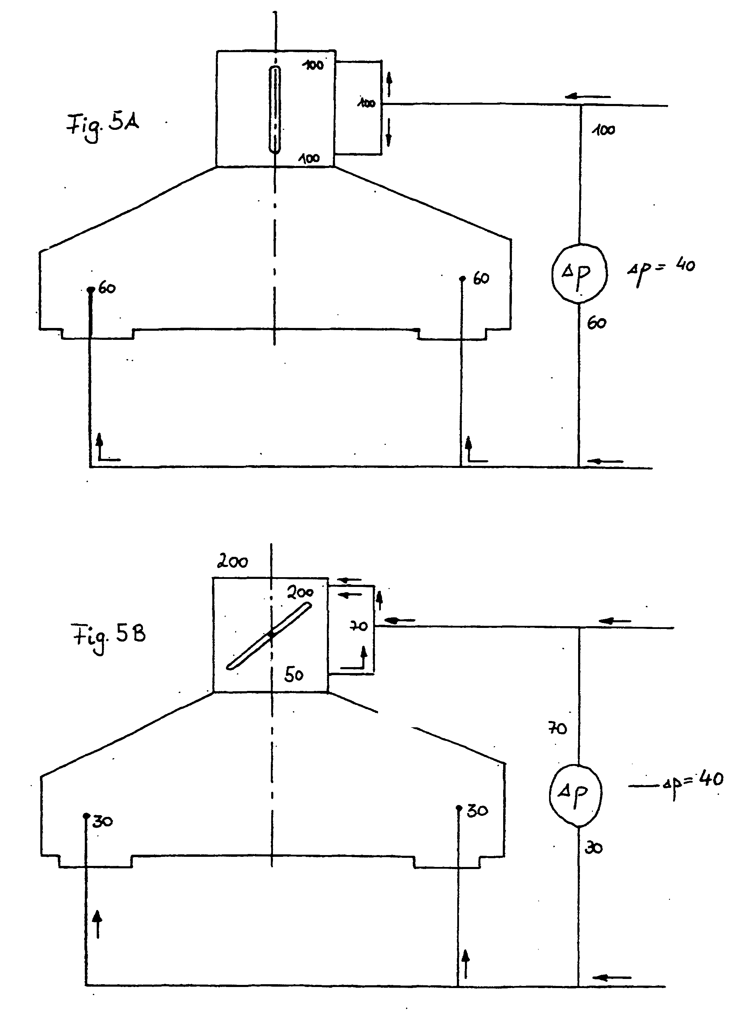

Fig. 5B zeigt die Drosselklappe 8 in einer Regelposition, wobei vor der Drosselklappe 8 weiterhin 200 Pa entstehen. An der ersten Meßstelle, d.h. an den Bohrungen 3 tritt ein Druckabfall von nur noch 30 Pa aufgrund des reduzierten Volumenstroms auf. An der zweiten Meßstelle hinter der Verengung kommen 20 Pa hinzu, so daß sich insgesamt 50 Pa an der zweiten Meßstelle vor der Drosselklappe 8 ergeben. An der dritten Meßstelle hinter der Drosselklappe 8 werden 200 Pa gemessen. Durch ein Überströmen durch die Verbindungsleitungen und -schläuche zwischen der zweiten und der dritten Meßstelle über der Drosselklappe 8 mittels des T-Stückes 14 ergibt sich dann ein mittlerer Druck von 70 Pa, der am Drucksensor 19 liegt, so daß dieser wiederum einen Differenzdruck von 40 Pa mißt. Das heißt, daß durch die Überströmung von der zweiten Meßstelle vor der Drosselklappe 8 zur dritten Meßstelle hinter der Drosselklappe 8 sich der tatsächlich am Drucksensor 19 liegende Druck beträchtlich reduziert.

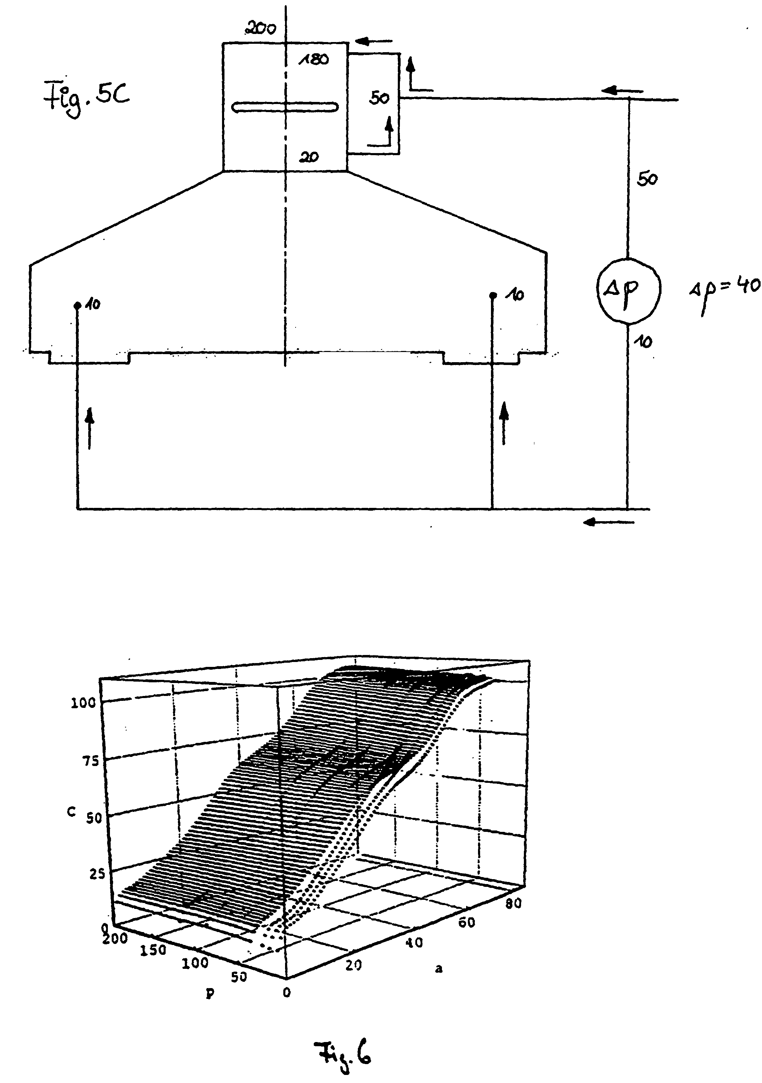

Fig. 5C zeigt die Drosselklappe 8 in der nahezu geschlossenen Stellung. Bei nahezu geschlossener Drosselklappe 8 ergibt sich zwischen der ersten und der zweiten Meßstelle d.h. zwischen den Bohrungen 3 und den Bohrungen 7 in Strömungsrichtung hinter der Drosselklappe 8 nur noch ein Druckabfall von insgesamt 20 Pa, so daß der größte Teil der Luft von der zweiten Meßstelle vor der Drosselklappe 8 zur dritten Meßstelle hinter der Drosselklappe 8 strömt. Auch dadurch reduziert sich der Differenzdruck am Drucksensor 19 wiederum auf 40 Pa.

Durch den Einbau geeigneter Strömungswiderstände in den Verbindungsleitungen kann dieser Druck so eingestellt werden, daß bei vollständiger geschlossener Drosselklappe 8 und maximalem Systemdruck gerade der maximale Sensordruck erhalten wird.

Anhand des in Fig. 6 dargestellte Kennlinienfeldes kann dann die Höhe des Volumenstromes nach der Gleichung V= C . $\sqrt{\Delta p}$ berechnet werden, wobei $\Delta p$ den Differenzdruck bezeichnet, der vom Drucksensor 19 zwischen der Verbindungsleitung der Druckmeßstellen über der Drosselklappe 8 und der statischen Druckmeßstelle 3 in der Luftverteilungskammer 2 gemessen wird. Der Drosselfaktor C hängt vom Vordruck p und vom Klappenwinkel der Drosselklappe 8 ab, er kann graphisch über eine dreidimensionale Flächenkurve ermittelt werden. Mittels Hinterlegung in einem Kennlinienfeld kann beim Anliegen der Meßwerte Wirkdruckdifferenz und Winkel der Drosselklappe der Faktor C der Anordnung ermittelt werden.

Die Anordnung des Differenzdurcksensors 19 bietet einen weiteren Vorteil insofern, als nicht mehr wie bei der üblichen Blendenmessung der Differenzdrucksensor direkt an die Meßstellen angehängt ist. Bei einer Äblufteinrichtung mit Schadstoffen ist nämlich der Differenzdrucksensor statisch angeschlossen, so daß keine Strömung zwischen den Wirkdruckmeßstellen und dem Differenzdrucksensor stattfindet. Im Laufe der Zeit wird die Konzentration der Schadstoffe in den Abluftleitungen innerhalb des Rohrstutzens 5 und innerhalb der Luftverteilungkammer 2 größer während die Schadstoffkonzentration in den Verbindungsschläuchen 12, 13, 15 gleich null ist. Bedingt durch den Konzentrationsunterschied zwischen den Verbindungsschläuchen und dem Innenraum des Strömungskanals ergeben sich Diffussionseffekte, so daß die Schadstoffe durch die Verbindungsschläuche bis zum Differenzdrucksensor 19 vordringen werden. Mittelfristig kann der Differenzdrucksensor 19 dadurch zerstört werden. Da die Schläuche 16 und 21, zwischen denen der Differenzdruck gemessen wird, bis zur Umgebungsluft weiterführen, wird das verhindert. Bei einer derartigen Ausbildung wird nämlich Frischluft von außen nach innen strömen. Der Differenzdrucksensor 19 wird nahe an den Druckaufnahmestellen 3, 5, 10 angeordnet, um ein hohes Nutzsignal zu erreichen.

Die Schlauchverbindungen 12 und 13 sind die einzigen verschmutzungsgefährdeten Stellen der ganzen Meßanordnung, da durch diese Schlauchleitungen verunreinigte Luft strömen kann. Die Schlauchleitungen 12 und 13 können daher durchsichtig ausgeführt sein, so daß eine optische Kontrolle möglich ist. Über die Demontage der O-Ringe 25, 26 ist eine vollständige Reinigung möglich.

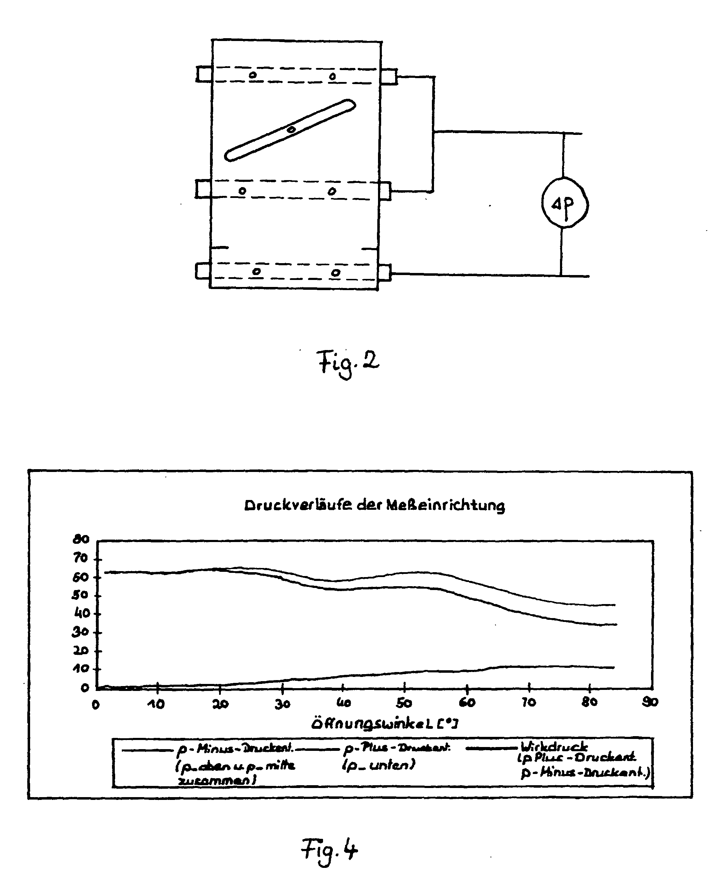

Fig. 2 zeigt ein weiteres Ausführungsbeispiel, bei dem statt der Verengung, die bei einem Abzug vorgesehen ist, eine Meßblende angeordnet ist. Diese Ausbildung eignet sich allgemein für die Messung der Stärke eines Gasvolumenstromes innerhalb einer Rohrleitung. Die Ausbildung des zweiten Ausführungsbeispiels entspricht im übrigen der des ersten in Fig. 1 dargestellten Ausführungsbeispiels.

Die oben beschriebene Vorrichtung zeichnet sich somit dadurch aus, daß sie aus einer Kombination einer festen Drosselstelle und einer Drosselstelle mit veränderlichem Drosselfaktor besteht, wobei der gesamte mögliche Volumenstrombereich über die Drosselstelle mit veränderlichem Drosselfaktor direkt eingestellt werden kann. Da aufgrund der Verbindung der Druckaufnahmestellen über der Drosselstelle mit veränderlichen Drosselfaktor bei gleichbleibendem Systemdruck unabhängig vom jeweiligen Volumenstrom ein nahezu gleichbleibendes Nutzsignal, d.h. ein nahezu gleichbleibender Differenzdruck erreicht wird, kann ein entsprechender Sensor eingesetzt werden, dessen optimal Empfindlichkeit im Bereich dieses Druckdifferenzwertes liegt. Da die gemessene Wirkdruckdifferenz unabhänig vom angeschlossenen Verbraucher erzeugt wird und der Wirkdruck an Druckabnahmestellen über Sammelleitungen beispielsweise Ringleitungen, die wenigstens zwei Druckabnahmebohrungen verbinden, erfaßt wird, ergibt sich eine von den Anschlußbedingungen des Verbrauchers unabhängige und ungünstige An- und Abströmverhältnisse kompensierende Messung.

## Patentansprüche

1. Vorrichtung zum Bestimmen der Stärke eines Gasvolumenstroms in einem Strömungskanal eines Verbrauchers, insbesondere eines Abzugs, **gekennzeichnet durch** zwei im Strömungskanal in Richtung des Gasstromes hintereinander angeordnete Drosselstellen (4, 8), von denen die hintere Drosselstelle (8) einen verstellbaren Drosselfaktor hat, Druckabnahmestellen (3, 7, 10) hinter der hinteren, zwischen der hinteren und der vorderen und vor der vorderen Drosselstelle (4), wobei die Druckabnahmestellen (7, 10) zwischen der hinteren und der vorderen Drosselstelle (4, 8) und hinter der hinteren Drosselstelle (8) **durch** gasführende Leitungen miteinander verbunden sind, einen Drucksensor (19), an dem die Druckdifferenz zwischen der Druckabnahmestelle (3) vor der vorderen Drosselstelle (4) und an den miteinander verbundenen Druckabnahmestellen (7, 10) liegt, und eine Einrichtung, die die Stärke des Gasvolumenstroms nach der Gleichung $V = C \cdot \sqrt{\Delta p}$ bestimmt, wobei V den Gasvolumenstrom, C den Drosselfaktor der Messanordnung und $\Delta p$ die am Drucksensor (19) liegende Druckdifferenz bezeichnen.

2. Vorrichtung nach Anspruch 1,

   **dadurch gekennzeichnet, dass** die Drosselstelle (8) mit verstellbarem Drosselfaktor eine Drosselklappe ist, deren Stellwinkel einstellbar ist.

3. Vorrichtung nach Anspruch 1,

   **dadurch gekennzeichnet, dass** die Drosselstelle (8) mit verstellbarem Drosselfaktor eine Blende mit einstellbarer Blendenöffnung ist.

4. Vorrichtung nach einem der Ansprüche 1 bis 3,

   **dadurch gekennzeichnet, dass** die vordere Drosselstelle eine Blende mit festem Blendenfaktor ist.

5. Vorrichtung nach einem der vorhergehenden Ansprüche,

   **dadurch gekennzeichnet, dass** die Druckabnahmestelle (3) vor der vorderen Drosselstelle und die Verbindung zwischen den Druckabnahmestellen (7, 10) über der hinteren Drosselstelle (8) mit der Umgebungsluft in Verbindung stehen.

6. Vorrichtung nach einem der vorhergehenden Ansprüche,

   **dadurch gekennzeichnet, dass** die vordere Drosselstelle (4) aus einer sich verengenden Luftverteilungskammer besteht und die hintere Drosselstelle (8) in einem daran angeschlossenen Abluftstutzen (5) angeordnet ist.

## Claims

1. Device for determining the intensity of a volumetric gas flow in a flow duct of a consumer, in particular of a fume extraction outlet, **characterized by** two throttle points (4, 8) which are arranged one behind the other in the flow duct in the direction of the gas flow and of which the rear throttle point (8) has an adjustable throttle factor, by pressure tapping points (3, 7, 10) downstream of the rear, between the rear and the front and upstream of the front throttle point (4), the pressure tapping points (7, 10) between the rear and the front throttle point (4, 8) and downstream of the rear throttle point (8) being connected to one another by means of gas-carrying lines, by a pressure sensor (19), at which lies the pressure difference between the pressure tapping point (3) upstream of the front throttle point (4) and at the pressure tapping points (7, 10) connected to one another, and by a means which determines the intensity of the volumetric gas flow according to the equation $V = C \cdot \sqrt{\Delta p}$, V designating the volumetric gas flow, C the throttle factor of the measuring arrangement and $\Delta p$ the pressure difference lying at the pressure sensor (19).

2. Device according to Claim 1, **characterized in that** the throttle point (8) with an adjustable throttle factor is a throttle flap, the set angle of which is adjustable.

3. Device according to Claim 1, **characterized in that** the throttle point (8) with an adjustable throttle factor is a diaphragm with an adjustable diaphragm orifice.

4. Device according to one of Claims 1 to 3, **characterized in that** the front throttle point is a diaphragm with a fixed diaphragm factor.

5. Device according to one of the preceding claims, **characterized in that** the pressure tapping point (3) upstream of the front throttle point and the connection between the pressure tapping points (7, 10) are connected to the ambient air via the rear throttle point (8).

6. Device according to one of the preceding claims, **characterized in that** the front throttle point (4) consists of a narrowing air distribution chamber, and the rear throttle point (8) is arranged in an exhaust-air connection piece (5) connected thereto.

**Revendications**

1. Dispositif pour la détermination de la force d'un débit-volume de gaz dans un tube de courant d'un appareil utilisateur, en particulier une hotte, **caractérisé par** deux points d'étranglement (4, 8) disposés l'un derrière l'autre dans le sens de l'écoulement du gaz dans un tube de courant, dont le point d'étranglement arrière (8) présente un facteur d'étranglement réglable, par des points de baisse de la pression (3, 7, 10) après le point d'étranglement avant (4), entre le point d'étranglement arrière et le point d'étranglement avant et avant le point d'étranglement avant (4), les points de baisse de la pression (7, 10) étant raccordés l'un à l'autre entre les points d'étranglement avant et arrière (4, 8) et après le point d'étranglement arrière (8) par l'intermédiaire de conduites de transport du gaz, par un capteur de pression au niveau duquel est présente la différence de pression entre le point de baisse de la pression (3) avant le point d'étranglement avant (4) et au niveau des points de baisse de la pression (7, 10) raccordés l'un à l'autre, et par un dispositif qui détermine la force du débit-volume de gaz selon l'équation $V = C \cdot \sqrt{\Delta p}$, dans laquelle V désigne le débit-volume de gaz, C le facteur d'étranglement du dispositif de mesure et $\Delta p$ la différence de pression présente au niveau du capteur de pression (19).

2. Dispositif selon la revendication 1, **caractérisé en ce que** le point d'étranglement (8) présentant un facteur d'étranglement variable est un clapet d'étranglement dont l'angle de réglage est réglable.

3. Dispositif selon la revendication 1, **caractérisé en ce que** le point d'étranglement (8) présentant un facteur d'étranglement variable est un diaphragme présentant une ouverture de diaphragme réglable.

4. Dispositif selon une des revendications 1 à 3, **caractérisé en ce que** le point d'étranglement avant est un diaphragme présentant un facteur d'obturation variable.

5. Dispositif selon une des revendications précédentes, **caractérisé en ce que** le point de baisse de la pression (3) avant le point d'étranglement avant et le raccordement entre les points de baisse de la pression (7, 10) sont raccordés à l'air environnant par l'intermédiaire du point d'étranglement arrière (8).

6. Dispositif selon une des revendications précédentes, **caractérisé en ce que** le point d'étranglement avant (4) est constitué d'une chambre de distribution de l'air se rétrécissant, et **en ce que** le point d'étranglement arrière (8) est disposé dans un manchon (5) d'évacuation d'air raccordé à ladite chambre.

Fig. 1

7

Fig. 2

Druckverläufe der Meßeinrichtung

Öffnungswinkel [°]

──── p-Minus-Druckent.  ──── p-Plus-Druckent.  ──── Wirkdruck
(p-oben u p-mitte          (p-unten)              (p Plus-Druckent.
zusammen)                                          p-Minus-Druckent.)

Fig. 4

Fig.3

Fig. 5A

$\Delta p = 40$

Fig. 5B

$\Delta p = 40$

Fig. 5C

Δρ = 40

Fig. 6